# EUROPEAN PATENT APPLICATION

(11) **EP 4 797 138 A1**
(43) Date of publication of application: **26.08.2026**
(21) Application number: 26155705.2
(22) Date of filing: 02.02.2026
(51) Int. Cl.: G06F 21/62

(54) **SECURING DATA LAKE TABLES USING ROW-LEVEL SECURITY**

(30) Priority: 20.02.2025 US 202519058080
(71) Applicant: Microsoft Technology Licensing, LLC, Redmond, WA 98052 (US)
(72) Inventor: RAO, Ravi Ranganatha, Redmond, 98052 (US); KUMAR, Paras, Redmond, 98052 (US); MERRILL, Aaron Joseph, Redmond, 98052 (US); NETZ, Amir Mordechai, Redmond, 98052 (US); PETCULESCU, Cristian, Redmond, 98052 (US); MUTHUKRISHNAN, SARAVANAN, Redmond, 98052 (US); VERMA, RAJAN, Redmond, 98052 (US); KUPPA, VAMSI MOHAN, Redmond, 98052 (US); BENCIC, ANTON, Redmond, 98052 (US); CAPLAN, JOSHUA CHAIT, Redmond, 98052 (US); SRINIVASAN, KANNAPIRAN, Redmond, 98052 (US); DUMITRU, MARIUS, Redmond, 98052 (US)
(74) Representative: CMS Cameron McKenna Nabarro Olswang LLP

(57) **Abstract**

Methods, apparatuses, and products for securing data lake tables using row-level security, including: accessing row-level security data for a table stored in a data lake of a data analytics platform, wherein the row-level security data comprises, for one or more roles, a corresponding expression applicable to the table; identifying, for each role of the one or more roles, a subset of a plurality of rows of the table accessible to a corresponding role by satisfying the corresponding expression; and storing, in the data lake, filtering data identifying, for each role of the one or more roles, the subset of the plurality of rows of the table accessible to the corresponding role.

## Description

### BACKGROUND

Data analytics platforms are used to access, manage, and analyze data for various purposes including business intelligence, real-time analytics, and data science using analytics engines. Data lakes are used in the data analytics platform to provide a centralized repository for storing data accessible to these data analytics engines. As the data lake is accessible to many workloads and many users, access controls are used to restrict what data is accessible to which users by defining permissions for users or groups or users to access some data.

Restrictions at the file or folder level may not be sufficient for certain types of data. For example, tables store data using multiple rows and columns. Only restricting access to the table itself is insufficient where different sets of data within the table should only be accessible to certain users. Accordingly, row-level security and column-level security may be used to determine which rows and/or columns, respectively, of a table are accessible to particular users or groups of users. While column-level security generally uses lists of accessible or inaccessible columns, row-level security generally relies on expressions that must be evaluated against each row to determine their accessibility.

Existing data lake implementations offer limited access control features, instead relying on downstream entities such as the analytics engines to enforce data access controls. This may necessitate defining access permissions for the same data multiple times across the different analytics engines. As these analytics engines may use different query languages to access table data, this may include creating functionally equivalent expressions for row-level security using different query languages. This presents the risk of inconsistent access permissions across analytics engines, potentially leading to inconsistent results when querying tables using different analytics engines. Moreover, this may allow a user to access data that should be restricted, posing potential security risks.

### SUMMARY

According to embodiments of the present disclosure, various methods, apparatus, and products for securing data lake tables using row-level security are described herein. In some aspects, securing data lake tables using row-level security includes: accessing row-level security data for a table stored in a data lake of a data analytics platform, wherein the row-level security data comprises, for one or more roles, a corresponding expression applicable to the table; identifying, for each role of the one or more roles, a subset of a plurality of rows of the table accessible to a corresponding role by satisfying the corresponding expression; and storing, in the data lake, filtering data identifying, for each role of the one or more roles, the subset of the plurality of rows of the table accessible to the corresponding role. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example system for securing data lake tables using row-level security in accordance with some embodiments.
Fig. 2 sets forth a flow chart illustrating an example method of securing data lake tables using row-level security in accordance with some embodiments.
Fig. 3 sets forth a flow chart illustrating an additional example method of securing data lake tables using row-level security in accordance with some embodiments.
Fig. 4 sets forth a flow chart illustrating an additional example method of securing data lake tables using row-level security in accordance with some embodiments.
Fig. 5 sets forth a flow chart illustrating an additional example method of securing data lake tables using row-level security in accordance with some embodiments.
Fig. 6 sets forth a flow chart illustrating an additional example method of securing data lake tables using row-level security in accordance with some embodiments.
Fig. 7 illustrates an exemplary computing device that may be specifically configured to perform one or more of the processes described in the present disclosure.
Fig. 8 sets forth a block diagram of a cloud service provider service architecture in accordance with some embodiments of the present disclosure.

### DESCRIPTION OF EMBODIMENTS

Data analytics platforms are used to access, manage, and analyze data for various purposes including business intelligence, real-time analytics, and data science. To perform these functions, the data analytics platforms may support multiple, different analytics engines to analyze, transform, and otherwise process data. The data analytics platform may also use a data lake as a centralized data repository accessible to the different analytics engines.

Data used by these analytics engines may be stored in the data lake as tables. Tables store rows of data that each include values for multiple columns. There may be scenarios where some users, even if they have access to the table itself, should not have access to all the rows in the table. For example, certain users may need to be restricted from or limited to accessing rows with certain values. Accordingly, row-level security can be used to control access to particular rows of a table by defining criteria that limit the scope of rows that are accessible to particular users or groups of users.

Existing implementations of data analytics platforms may rely on the analytics engines to support and enforce row-level security. This may result in inconsistencies where a user querying a table using one analytics engine will receive different results than if using another analytics engine due to differences in the row-level security. Moreover, as these analytics engines may process queries and access data from the data lake using different query languages, it may be difficult for users to create consistent row-level security policies across different analytics engines.

To address these shortcomings, the approaches set forth herein describe approaches for row-level security maintained at the data lake. Row-level security data may be defined in the data lake for a table. This row-level security data may include, for a given role, an expression that can be evaluated against the rows of the table to identify those rows accessible to the given role. Filtering data identifying these particular rows can then be stored in the data lake with the table. When a query targeting the table is to be executed by a workload of an analytics engine, the workload can use this precalculated filtering data to filter the table based on the role or roles associated with the query. As the filtering data is stored in the data lake itself, row-level security can be consistently applied across all analytics engines.

Data security is essential in data analytics platforms. Row-level security may be required to secure data using fine degrees of granularity. Inconsistently applied row-level security may result in unintended data exposure or inconsistent results when accessing data using different analytics engines. This may deter adoption of the data analytics platform, leading to potential revenue loss, and may cause legal or regulatory challenges due to unintentional data exposure. The approaches set forth herein ensure consistent row-level security across all analytics engines, improving overall security and user satisfaction, thereby increasing overall adoption and revenue.

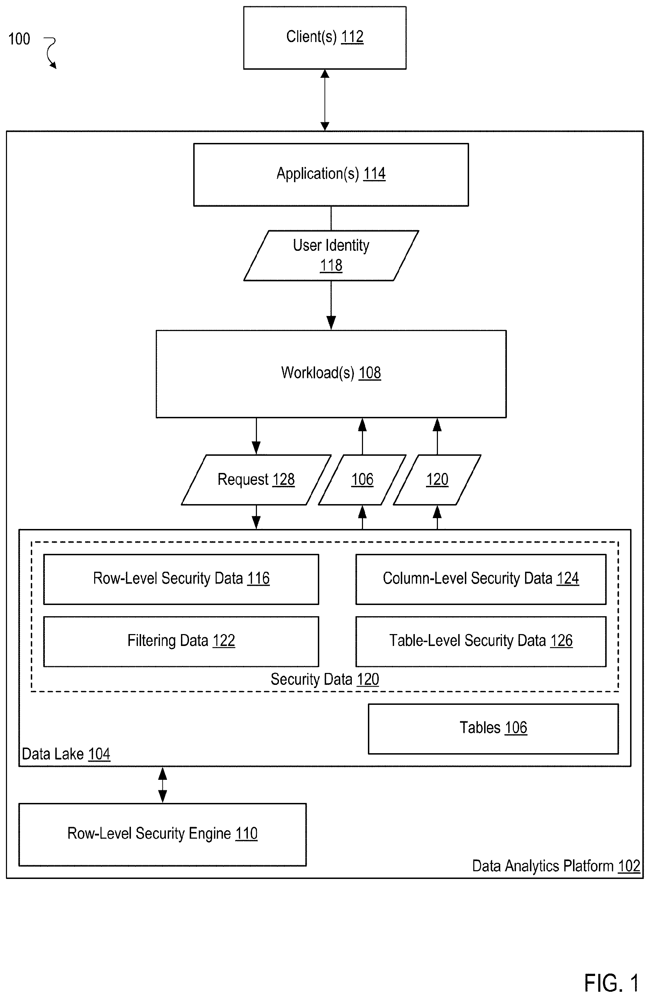

Fig. 1 sets forth a diagram of an example system for securing data lake tables using row-level security in accordance with some embodiments of the present disclosure. The system 100 includes a data analytics platform 102. The data analytics platform 102 is a computing system for analyzing large amounts of data. The data analytics platform 102 may include cloud-based computing systems, on-premises computing systems, or combinations thereof. To facilitate these operations, the data analytics platform 102 includes a data lake 104. The data lake 104 is a data repository for storing data in its raw or natural format. The data lake 104 may be used to store data including structured data such as structured data from relational databases (rows and columns), semi-structured data (comma-separated value (CSV) files, logs, JavaScript Object Notation (JSON)), unstructured data (emails, documents, PDFs), binary data (images, audio, video), or other data as can be appreciated.

The data stored in the data lake 104 includes various types of data artifacts. These data artifacts may include, for example, files, folders, or other data as can be appreciated. In some embodiments, multiple data artifacts are logically related in a hierarchy or grouping. For example, a folder data artifact may include one or more nested data artifacts, which themselves may include files or other folders. Particularly, the data lake 104 of Fig. 1 includes one or more tables 106. A table 106 is a type of structured data where records of data are stored as rows of the table 106, with each row including values for one or more columns (e.g., fields) of the table. In some embodiments, a table 106 may be encoded as a single data artifact, such as a single file. In some embodiments, a table 106 may be encoded as a folder that itself includes multiple files to encode the data of the table 106.

In some embodiments, to facilitate the data analytics operations of the data analytics platform 102, the data analytics platform 102 supports or executes one or more workloads 108. Each workload 108 may correspond to a particular data analytics engine, an application, process, or service that assists in processing and analyzing large data sets. Here, these workloads 108 access data artifacts from the data lake 104, including the one or more tables 106, to perform their respective functions. Particularly, in some embodiments, the workloads 108 issue queries against the tables 106 to select data from the tables 106 for use in data processing.

In some embodiments, a client 112 (e.g., a client computing device or user device) interacts with the data analytics platform 102 using one or more applications 114. These applications 114 may access one or more of the workloads 108 by issuing queries or requests to the workloads 108 based on user inputs, presenting data or other output from the workloads 108, and the like. Accordingly, in some embodiments, these workloads 108 implement Application Programming Interfaces (APIs) or other interfaces exposed to these applications 114. In some embodiments, a client 112 interacts with the data analytics platform 102 by accessing these exposed APIs or interfaces of the workloads 108 directly.

Access controls implemented in the data analytics platform 102 control what data is accessible to which users. This may be used for various purposes, including preventing access to confidential information, restricting access to certain data to satisfy regulatory requirements, or other purposes as can be appreciated. Access controls for tables 106 may be defined at various degrees of granularity. In some embodiments, table-level security is used to control which tables 106 as a whole are accessible to which uses. In some embodiments, it is necessary to restrict access to particular subsets of data within a given table 106. For example, a single table 106 may be used to store data for users of multiple organizations, multiple regions, or other groupings and users should be restricted to only accessing, from that table 106, data for their respective grouping. Accordingly, in some embodiments, row-level security is used to control access to particular rows of a table while column-level security is used to restrict access to particular columns of a table 106.

In some existing implementations, enforcing access controls to data is largely deferred to the analytics engines accessing the data (e.g., the particular workloads 108 of those analytics engines). In these implementations, a user such as an administrator or security team member may define the access controls for each analytics engine. This presents various drawbacks related to security and the overall user experience. For example, as access controls are defined on a per-analytics engine basis, it may be possible for the same user to have different permissions to access the same data across different analytics engines. This may cause a user to have unintended access to some data, presenting possible security concerns, and may cause a user to be presented with different results when trying to access some data set using different analytics engines. Moreover, this requires access controls to be defined multiple times, potentially using different methodologies, further increasing the overall complexity and user burden in creating access controls. Within the context of row-level and/or column-level security for a table 106, different analytics engines may use different query languages for querying tables 106, further complicating the process of applying consistent security for the same table across different analytics engines.

In contrast, the approaches set forth herein define row-level security, as well as other types of security, for tables 106 in the data lake 104 itself. In some embodiments, the data lake 104 stores security data 120 defining permissions for tables 106 on a per-table basis. In some embodiments, the security data 120 defines permissions for a given table 106 by members of one or more roles. A role is a logical grouping of identities. Such identities may include user identities and/or non-user identities such as service principals. Thus, permissions allocated to a particular role will be allocated to members of that role. Although the following discussions are presented in the context of users and user identities, readers will appreciate that the approaches set forth herein are also applicable to other identities. In some embodiments, the data lake 104 and/or the data analytics platform 102 implements an API or other interface for creating security data 120 for particular tables 106. For example, in some embodiments, this API includes a public API that allows any user, or other identity, with sufficient access to a table 106 to create and/or modify security data 120 for that table 106. In some embodiments, the data lake 104 and/or the data analytics platform 102 implements an API or other interface for creating roles and/or assigning members to roles.

The security data 120 includes row-level security data 116. Row-level security data 116 defines which rows of a particular table 106 are accessible to members of particular roles. Particularly, in some embodiments, the row-level security data 116 for a particular table 106 includes, for each role referenced in the row-level security data 116, an expression that, when evaluated, determines whether members of a particular role can access a particular row of that table 106. In other words, row-level security data 116 may include, for each role of one or more roles, a corresponding expression that, if evaluated to "TRUE" for a particular row, grants access to that row by members of that the corresponding role. In some embodiments, row-level security data 116 is defined as a Structured Query Language (SQL) statement or other query statement that, when evaluated, selects a subset of rows from the table 106.

As an example, assume a table 106 "TableA" that has columns "Country" and "State." Further assume that members of a particular role should only have access to those rows in TableA having values "USA" and "CA" for the columns "Country" and "State," respectively. In this example, row-level security data 116 for TableA includes the expression "SELECT * FROM TableA WHERE Country = 'USA' AND State = 'CA'." When evaluated, this expression selects those rows from TableA having the requisite values for "Country" and "State."

Executing the expressions in row-level security data 116 for each query issued to a given table 106 would add some level of computational complexity for each query. Moreover, as the particular rows accessible to a given table 106 may not change over time, this would result in repeatedly executing the same expression to achieve the same results. Accordingly, in some embodiments, a row-level security engine 110 precomputes which rows of a table 106 are accessible to each role referenced in row-level security data 116 for that table 106. These precomputed rows are stored as filtering data 122. For example, in some embodiments, the row-level security engine 110 accesses a particular table 106 and the row-level security data 116 for that table 106 from the data lake 104. This may include the row-level security engine 110 being queried by the data lake 104 to generate filtering data 122. This may also include the row-level security engine 110 accessing this data independent of any particular query, such as to periodically synchronize or update the filtering data 122 for that table 106.

The row-level security engine 110 executes the expression in the row-level security data 116 for one or more of the roles referenced in the row-level security data 116. This may include executing the expression for each role or a subset of roles referenced in the row-level security data 116. This returns, for a given role, a subset of the rows responsive to that expression for the given role and therefore accessible to members of the given role. The row-level security engine 110 then generates filtering data 122 identifying those rows accessible to the given role. Thus, the filtering data 122 for a particular table 106 identifies, for one or more roles, those rows accessible to each role based on the expression defined in the row-level security data 116 for the table 106.

The filtering data 122 may identify rows of a table 106 accessible to a particular role using a variety of approaches. In some embodiments, the filtering data 122 identifies accessible rows for a particular row using a bitmap. Thus, for a given table 106, each role referenced in its row-level security data 116 may have a corresponding bitmap in the filtering data 122. For example, assume a table 106 having eight rows, with a particular role having access to the third, fourth, and sixth row in the table 106. Filtering data 122 for that role and table 106 may be encoded as the bitmap "00110100," with a one indicating an accessible row and a zero indicating an inaccessible row. As this filtering data 122 will be used by workloads 108 in enforcing row-level security, to be described in further detail below, the use of a bitmap provides a simple and understandable format for all workloads 108. Readers will appreciate that the use of a bitmap is merely illustrative and that other approaches for identifying rows of a table 106 accessible to particular roles are also contemplated within the scope of the present disclosure. For example, filtering data 122 may be encoded as a listing or enumeration of row identifiers, ranges of row identifiers, or using other approaches. The data lake 104 then stores the filtering data 122 generated by the row-level security engine 110 so as to be accessible to one or more workloads 108.

In some embodiments, the expression defined in the row-level security data 116 for a table 106 may reference another table 106. In other words, to evaluate the expression against one table 106, data is accessed from another table 106. For example, assume a table 106 "Sales" storing records of sales transactions and another table 106 "Stores" storing records identifying particular stores by their store ID, region, and country. Further assume that the Sales table 106 includes a column "StoreID" that is a foreign key to the "StoreID" column in the Stores table 106. In this example, assume that the Sales table 106 is to be secured such that users can only see sales records for specific countries. Specifically, users of a specific role should only see sales records for the United States (e.g., where the "Country" column of the Stores table 106 equals "USA"). Here, the expression for that role may include "SELECT * FROM Sales LEFT OUTER JOIN UsersToStores ON Sales.StoreId = UsersToStores.StoreId WHERE Stores.Country = 'USA'." Thus, the expression for row-level security data 116 for the Sales table references the Store table.

Where the row-level security data 116 for a table 106 references another table 106, the one or more access controls for that referenced table 106 may be ignored when evaluating the row-level security data 116 expression. Returning to the example above, assume that row-level security data 116 is also defined for the Stores table. In this example, row-level security data 116 for the Stores table will be ignored when evaluating the row-level security data 116 for the Sales table. In other words, when determining what rows of the Sales table 106 are accessible to a particular role, the specific rows of the Stores table 106 accessible to that role are not taken into consideration. In some embodiments, table-level and/or column level security for referenced tables 106 may also be ignored when evaluating row-level security data 116 expressions.

In some embodiments, the security data 120 stored in the data lake 104 also includes column-level security data 124 indicating which columns of a table 106 should be accessible to members of particular roles. This may include a listing of columns that should not be accessible to members of particular roles and/or a listing of only those columns that are accessible to members of particular roles. In some embodiments, the security data 120 stored in the data lake 104 also includes table-level security data 126 indicating which roles have access to a table 106 and/or are restricted from accessing the table 106.

A workload 108 needing to query a table 106 sends a request 128 to the data lake 104. The request 128 indicates that data needed by the workload 108 in order to execute a query against the table 106 and enforce access permissions (e.g., table-level, row-level, and/or column level security) for the table 106. In some embodiments, the request 128 includes a request for the table 106 itself. Accordingly, in some embodiments, the data lake 104 provides the table 106 in response to the request 128. In some embodiments, the request 128 includes a request for security data 120. For example, in some embodiments, the request 128 includes a request for security data 120 in general, without specifically identifying a type of security data 120 to be returned. In this example, the data lake 104 returns column-level security data 124, table-level security data 126, and/or filtering data 122 where defined for the table 106. In some embodiments, the request 128 includes a request for a specific type of security data 120 that the data lake 104 returns in response to the request 128. In some embodiments, the workload 108 requests the table 106 and the security data 120 using the same or separate requests 128. Readers will appreciate that, as the rows accessible to particular roles have been precalculated and encoded in the filtering data 122, the workload 108 only needs the filtering data 122 to enforce row-level security for a table 106, not the row-level security data 116.

In some embodiments, a workload 108 implements or has access to a cache, such as a multi-user cache, that may be used to store tables 106 and/or security data 120. Accordingly, where the table 106 and/or the requisite security data 120 is available to the workload 108 from cache they need not be requested from the data lake 104 by the workload 108. In some embodiments, the data lake 104 periodically synchronizes security data 120 with one or more workloads 108 (e.g., using the multi-user cache or another cache) to reduce the need for requests 128 for security data 120 from workloads in order to service queries.

In some embodiments, the data lake 104 does not store filtering data 122 for some table 106. For example, filtering data 122 for that table 106 may not yet be generated by the row-level security engine 110 or the version of the filtering data 122 stored in the data lake 104 may be outdated. Accordingly, in some embodiments, in response to a request 128 for filtering data 122 from a workload 108 (e.g., either specifically for filtering data 122 or for more generalized security data 120), the data lake 104 queries the row-level security engine 110 to generate filtering data 122 for the table 106. The data lake 104 then provides this filtering data 122 to the workload 108 and stores the filtering data 122 for subsequent use.

The workload 108 then executes a query against the table 106 using the security data 120. The query is associated with some user of the data analytics platform 102. For example, the query may include a query generated by an application 114 accessed by the user or a query received from the user directly. As another example, the query may include a query generated by the workload to perform some other function or task in association with the user. Accordingly, in some embodiments, the workload 108 determines the role memberships of the user using a user identity 118 received from the user (e.g., either from a client 112 associated with the user or via an application 114 accessed by the client 112). The user identity 118 is an authentication credential uniquely identifying the user, such as a token. In some embodiments, the workload 108 accesses, from the data lake 104, role membership data indicating the members of particular roles. The workload 108 then references the user identity 118 against this role membership data to determine the role memberships of the user.

In some embodiments, where table-level security data 126 is applied to the table 106, the workload 108 first determines if the user is a member of a role that has access permissions for the table 106 as a whole. If not, the workload 108 may generate an error for the query or generate a null or empty set as a response to the query. For example, where the table 106 is queried using a nested statement as part of some other query targeting multiple tables 106, the workload 108 may generate an empty set as a response to the nested statement that is then used in further processing the rest of the query. Where the user has access permissions for the table 106, the workload 108 then enforces row-level security and/or column-level security, where applicable, for the table 106.

In some embodiments, enforcing row-level security includes filtering the table 106 using the filtering data 122. Filtering the table 106 using the filtering data 122 includes selecting, from the table 106, only those rows indicated as being accessible to the role(s) of the user. This eliminates the need for the workload 108 to process or understand the expression(s) defined in the row-level security data 116. In some embodiments, enforcing column-level security includes filtering the table 106 using the column-level security data 124. In some embodiments, filtering the table 106 using the column-level security data 124 includes selecting, from the table 106, only those columns indicated as being accessible to the role(s) of the user. In some embodiments, filtering the table 106 using the column-level security data 124 includes including, in the filtered table 106, those columns not accessible to the user and masking the values for that column. Masking the values for a column may include, for example, replacing all values with some default value, replacing each character in each value with an "X" or other designated character, applying some function to each value to generate a masked or obfuscated value, or applying other operations to the values for a column. The workload 108 then executes the query against this filtered table 106.

In some embodiments, a user is a member of multiple roles having different access permissions for the table 106. For example, a user may be a member of multiple roles that have different row-level security, column-level security, and/or table-level security. In some embodiments, a user has access permissions for a particular table 106, row, and/or column if the user is a member of any role with access to that table 106, row, and/or column. Returning to the example above with TableA having eight rows, assume that a user is a member of roles X and Y. Further assume that role X has access to the first, second, and fifth row of TableA while role Y has access to the second and sixth row of TableA. In this example, the user would have access to the first, second, fifth, and sixth rows of TableA. In other words, access permissions for a user for a table 106, row, and/or column may include the union of access permissions across all roles of the user. Returning to the example above where filtering data 122 is encoded using bitmaps, the row-level security of a given table 106 for a user may be expressed as the bitwise-OR of the bitmaps for all roles of the user.

In some embodiments, workloads 108 are classified as either trusted or untrusted workloads 108. A trusted workload 108 is a workload 108 that both accesses the data lake 104 using a service-to-service token and implements a multi-user cache for servicing queries or requests. This multi-user cache may be used to store tables 106 or other data artifacts, security data 120 for tables 106, artifact-level security data for data artifacts, and the like. A service-to-service token is a workload-specific (e.g., analytics engine-specific) authentication credential for accessing the data lake 104, in contrast to a user-specific authentication credential from end users. An untrusted workload 108 uses neither a service-to-service token nor a multi-user cache. In some embodiments, other criteria may also be used to delineate trusted and untrusted workload 108.

In some embodiments, access to tables 106 in the data lake 104 is based on whether or not requests 128 to access that table 106 come from a trusted workload 108. For example, a request 128 to access a table 106 from a trusted workload 108 may include service-to-service token (e.g., a service identity) that grants access to all data stored in the data lake 104. Accordingly, a request 128 for a table 106 will be granted by the data lake 104 due to the inclusion of the service-to-service token, indicating that the request 128 comes from a trusted workload 108. This allows trusted workloads 108 to execute queries against the table 106, including filtering the table 106 using filtering data 122 as described above.

In some embodiments, the data lake 104 automatically denies requests 128 for tables 106 not received from a trusted workload 108 if row-level security data 116 and/or column-level security data 124 are applied to that table 106. For example, an untrusted workload 108 may request a table 106 or a user may request a table 106 directly using an API or other interface of the data lake 104. In some embodiments, such requests 128 include a user identity 118 that allows the data lake 104 to enforce table-level security (e.g., using table-level security data 126) for that table 106. If a user does not have table-level access to the table 106 the data lake 104 will deny the request 128. If a user does have table-level access to the table 106 the data lake 104 then determines if any row-level security data 116 is applied to that table 106. If not, the request 128 is allowed and the table 106 is returned. Otherwise, the request 128 is denied. This prevents users from accessing restricted rows by accessing the table 106 as a whole. In other words, in some embodiments, row-level security and column-level security are only enforced by trusted workloads 108, thereby restricting access to tables 106 secured using row-level security and/or column-level security to trusted workloads 108.

Readers will appreciate that the approaches set forth above allow for row-level security to be defined at the data lake 104. This ensures that row-level security is consistently applied across multiple workloads 108, improving overall system utility and security. Moreover, as the rows accessible to particular roles are precalculated by the row-level security engine 110, workloads 108 do not have to evaluate row-level security expressions at runtime, improving workload 108 performance by reducing overall latency. Although the examples set forth herein are described in the context of a data analytics platform 102 and a data lake 104, readers will appreciate that the approaches set forth herein are applicable to any computing platform whereby multiple workloads can access the same data repository.

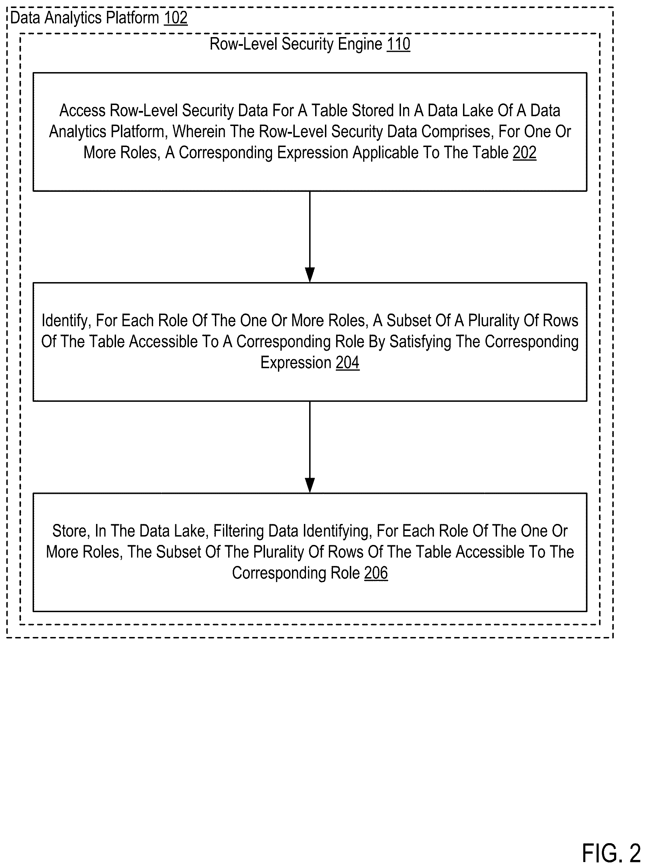

For further explanation, Fig. 2 sets forth a flowchart of another example method of securing data lake tables using row-level security in accordance with some embodiments of the present disclosure. The method of Fig. 2 may be performed, for example, in a data analytics platform 102. The method of Fig. 2 includes accessing 202 (e.g., by a row-level security engine 110) row-level security data 116 for a table 106 stored in a data lake 104 of a data analytics platform 102, wherein the row-level security data 116 comprises, for one or more roles, a corresponding expression applicable to the table 106. In other words, in some embodiments, the row-level security data 116 for the table 106 includes, for each role of one or more roles, a corresponding expression to be evaluated using the rows of the table. Such an expression may include or be included in an SQL statement or other database statement as can be appreciated.

In some embodiments, the row-level security engine 110 accesses 202 the row-level security data 116 based on a request or query from the data lake 104 to generate filtering data 122 for the table 106. For example, where the data lake 104 needs to provide the filtering data 122 to a workload 108 to service a query against the table 106 and that filtering data 122 is not available, the data lake 104 requests the filtering data 122 from the row-level security engine 110. In some embodiments, the row-level security engine 110 accesses 202 the row-level security data 116 as part of a synchronization process with the data lake 104 to ensure that the data lake 104 has current filtering data 122 reflecting any changes to the row-level security data 116 and/or the table 106.

The method of Fig. 2 also includes identifying 204, for each role of the one or more roles, a subset of the plurality of rows of the table 106 accessible to a corresponding role by satisfying the corresponding expression. As is set forth above, the expression for some role in the row-level security data 116 is an expression that selects a subset of rows from the table 106 that satisfy the expression (e.g., that are responsive to the expression). Accordingly, in some embodiments, identifying 204, for each role of the one or more roles, a subset of the plurality of rows of the table 106 accessible to a corresponding role by satisfying the corresponding expression includes executing or applying the corresponding expression for a given role to the table 106 to identify a subset of rows accessible to the given role. Where the row-level security data 116 references multiple roles each having their own corresponding expression, this process is repeated for each role.

The method of Fig. 2 also includes storing 206, in the data lake 104, filtering data 122 identifying, for each role of the one or more roles, the subset of the plurality of rows of the table 106 accessible to the corresponding role. The filtering data 122 for a table 106 includes data that specifically identifies the rows of the table 106 accessible to one or more roles. For example, in some embodiments, the filtering data 122 includes, for each role referenced in the row-level security data 116, a corresponding bitmap or other information encoding a particular subset of rows of the table 106. In some embodiments, the row-level security engine 110 stores 206 the filtering data 122 by providing the filtering data 122 to the data lake 104 in response to a query or request to generate the filtering data 122.

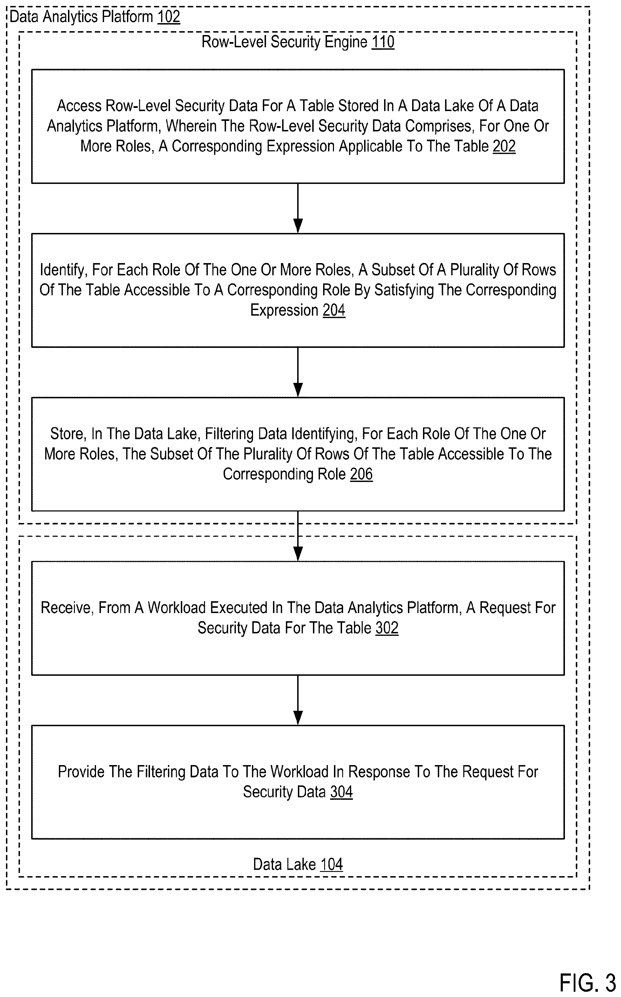

For further explanation, Fig. 3 sets forth a flowchart of another example method of securing data lake tables using row-level security in accordance with some embodiments of the present disclosure. The method of Fig. 3 also includes receiving 302 (e.g., by the data lake 104), from a workload 108 executed in the data analytics platform 102, a request 128 for security data 120 for the table 106. In some embodiments, the request 128 includes a request 128 for a specific type of security data 120, such as the filtering data 122. In some embodiments, the request 128 includes a request 128 for security data 120 in general (e.g., for any applicable security data 120).

The method of Fig. 3 also includes providing 304 the filtering data 122 to the workload 108 in response to the request 128 for the security data 120. In some embodiments, the data lake 104 loads a previously stored instance of the filtering data 122 and provides 302 the filtering data 122 in response to the request 128. In some embodiments, where the data lake 104 does not store filtering data 122 for the table 106 when the request 128 is received 302, the data lake 104 requests the filtering data 122 from the row-level security engine 110. The data lake 104 then provides 304 this filtering data 122 received from the row-level security engine 110 in response to the request 128. In some embodiments, the data lake 104 stores this filtering data 122 for later use, such as to service subsequent requests 128 for the filtering data 122.

In some embodiments, the workload 108 then executes a query targeting the table 106 by filtering the table 106 using the filtering data 122. This includes selecting those rows of the table 106 accessible to roles of a user corresponding to the query as indicated in the filtering data 122. The workload 108 then executes the query against the filtered table 106. By providing 304 the filtering data 122 to the workload 108, the workload 108 is able to enforce row-level security for the table 106 without evaluating the expression(s) defined in the row-level security data 116 for the table 106, improving overall performance by the workload 108 due to the reduced computational complexity of executing queries against the table 106. Moreover, as the data lake 104 provides filtering data 122 usable by multiple workloads 108, this ensures that row-level security is consistently applied across the multiple workloads 108, improving overall system utility and performance.

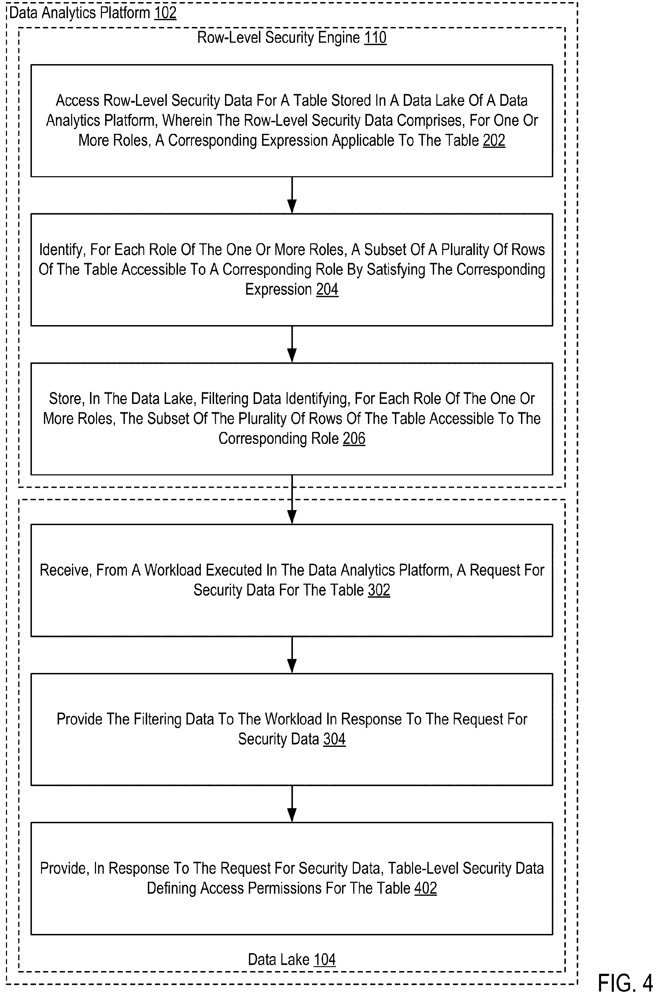

For further explanation, Fig. 4 sets forth a flowchart of another example method of securing data lake tables using row-level security in accordance with some embodiments of the present disclosure. The method of Fig. 4 also includes providing 402, in response to the request for security data 120, table-level security data 126 defining access permissions for the table 106. The table-level security data 126 indicates particular roles that do or do not have access to the table 106 as a whole. In some embodiments, the workload 108 applies the table-level security data 126 before filtering data 122 and/or column-level security data 124 when executing queries against the table 106. For example, where a user does not have access permissions for the table 106, the workload 108 need not filter the table using the filtering data 122 and/or column-level security data 124. In other words, in some embodiments, the workload 108 only filters the table 106using the filtering data 122 and/or column-level security data 124 where a user associated with a query is a member of a role that has access to the table 106.

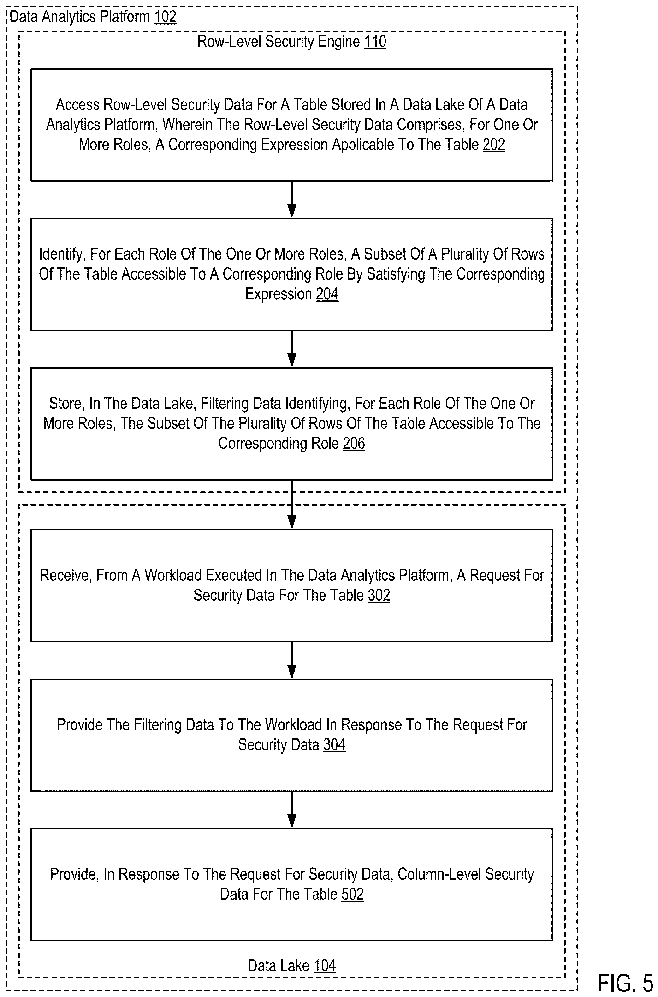

For further explanation, Fig. 5 sets forth a flowchart of another example method of securing data lake tables using row-level security in accordance with some embodiments of the present disclosure. The method of Fig. 5 also includes providing 502, in response to the request for security data 120, column-level security data 124 for the table 106. Column-level security data 124 indicates, for one or more roles, a set of columns accessible or inaccessible to the corresponding role. In some embodiments, the workload 108 filters a table 106 to be queried by selecting only those columns accessible to roles of a user associated with a query as indicated in the column-level security data 124. In some embodiments, the workload 108 filters a table 106 to be queried by masking values in columns inaccessible to roles of this user. The workload 108 then executes the query against this filtered table 106.

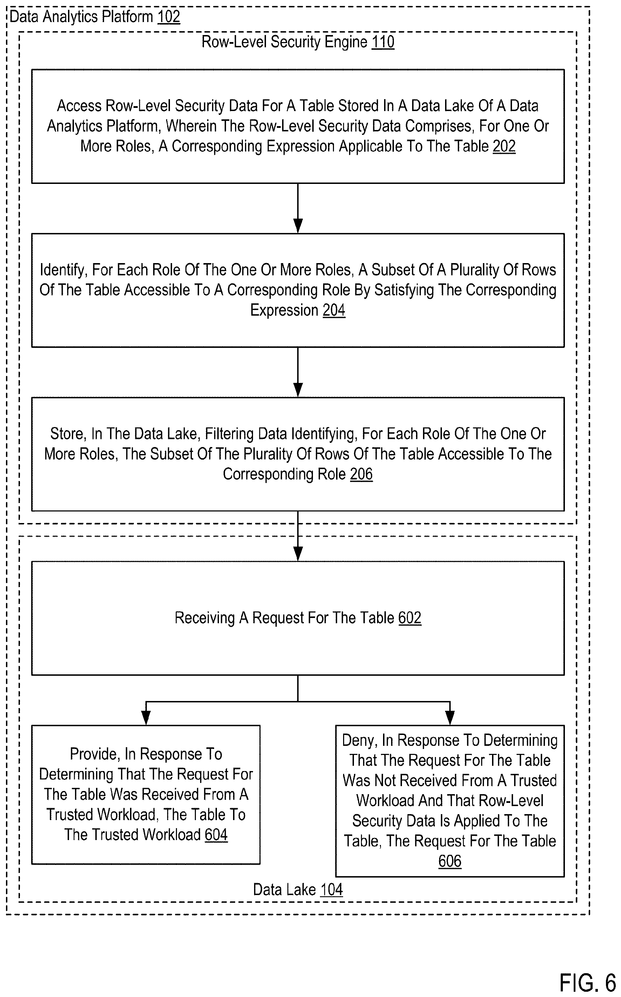

For further explanation, Fig. 6 sets forth a flowchart of another example method of securing data lake tables using row-level security in accordance with some embodiments of the present disclosure. The method of Fig. 6 also includes receiving 602 a request 128 for the table 106. In some embodiments, the request 128 includes a request 128 from a trusted workload 108. In some embodiments, the request 128 includes a request 128 not from a trusted workload 108, such as from an untrusted workload 108 or from a user via an API or other interface of the data lake 104.

The data lake 104 allows the request 128 if received 602 from a trusted workload 108. Accordingly, the method of Fig. 6 also includes providing 604, in response to determining that the request 128 for the table 106 was received from a trusted workload 108, the table to the trusted workload 108. In some embodiments, determining that the request 128 for the table 106 was received from a trusted workload 108 includes determining that the request 128 includes or is otherwise associated with a system-to-system token (e.g., a system identity) that grants access to all data in the data lake 104. As trusted workloads 108 use system-to-system tokens to access the data lake 104, a request 128 that includes or is otherwise associated with a system-to-system token is necessarily received from a trusted workload 108.

In some embodiments, if the request 128 was not received from a trusted workload 108, the data lake 104 accepts or denies the request 128 dependent on whether row-level security is applied to the table 106. Accordingly, the method of Fig. 6 also includes denying 606, in response to determining that the request 128 for the table 106 was not received 602 from a trusted workload 108 and that row-level security data 116 is applied to the table 106, the request for the table 106. In some embodiments, determining that the request 128 for the table 106 was not received 602 from a trusted workload 108 includes determining that the request 128 includes or is otherwise associated with a non-system-to-system token such as a user identity 118, necessarily indicating that the request 128 was received from an untrusted workload 108 or directly from a user.

In some embodiments, in response to determining that the request 128 was not received 602 from a trusted workload 108, the data lake 104 determines if the user associated with the request 128 has table-level access to the table 106. In some embodiments, this includes the data lake 104 accessing table-level security data 126 for the table and determining if the user is a member of a role that has access to the table. If not, the request 128 is denied. If so, the data lake 104 then determines if row-level security data 116 is applied to the table 106. In some embodiments, as the data lake 104 does not apply the filtering data 122 to the table 106 when returning the request, the request 128 is automatically denied if row-level security data 116 is applied so as to prevent access to rows of the table that may otherwise be restricted. In some embodiments, the data lake 104 allows the request 128 if row-level security data 116 is not applied.

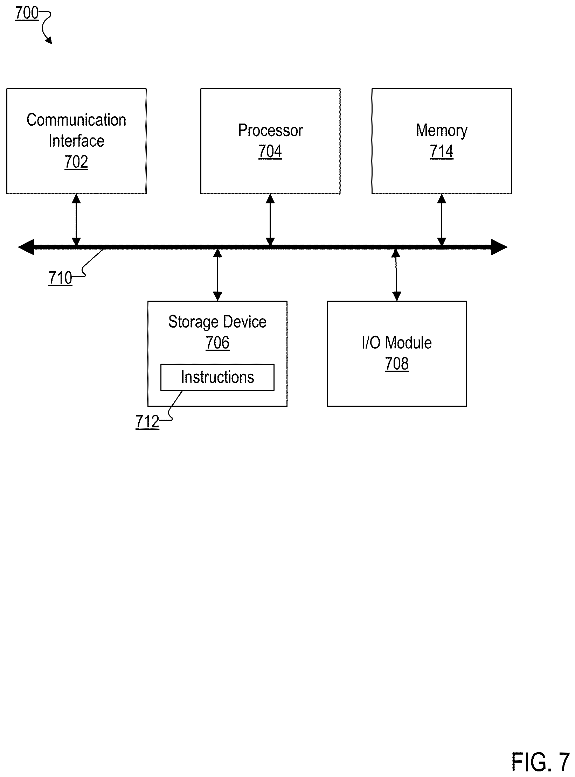

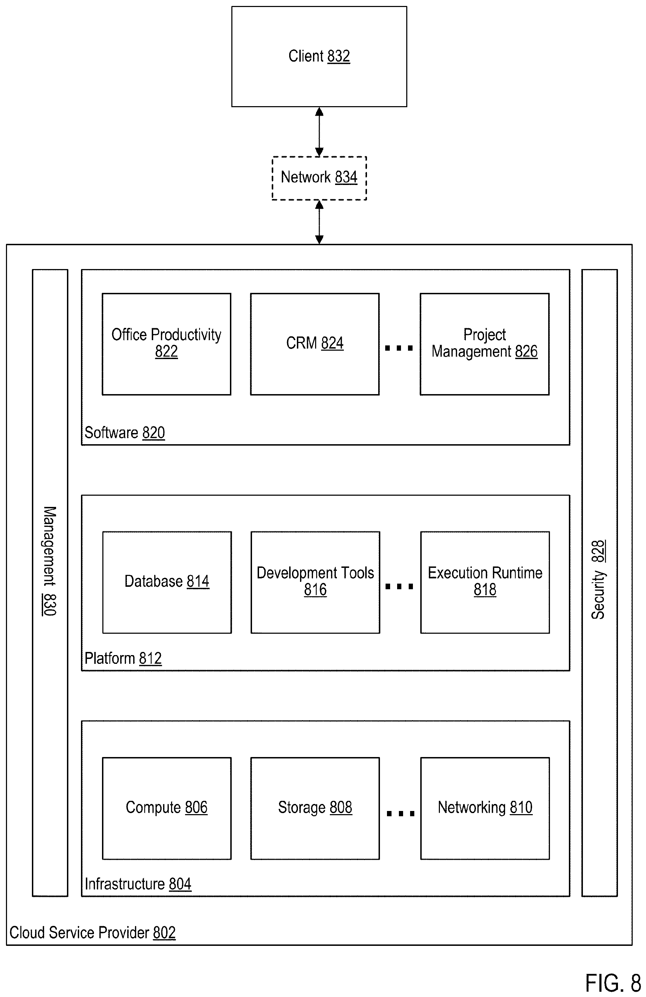

For further explanation, the sections included below provide some details regarding technologies that may be used to support securing data lake tables using row-level security in accordance with some embodiments. For example, Fig. 7 sets forth an example of a computing device that may be used for some portion of securing an operating system in accordance with some embodiments. As an additional example of technologies that may be used to support securing data lake tables using row-level security, Fig. 8 sets forth a block diagram of a cloud service provider 802 service architecture in accordance with some embodiments of the present disclosure.

For further explanation, Fig. 7 illustrates an exemplary computing device 700 that may be specifically configured to perform one or more of the processes described herein. As shown in Fig. 7, computing device 700 may include a communication interface 702, a processor 704, a storage device 706, an input/output (I/O) module 708, and computer memory 714 communicatively connected one to another via a communication infrastructure 710. While an exemplary computing device 700 is shown in Fig. 7, the components illustrated in Fig. 7 are not intended to be limiting. Additional or alternative components may be used in other embodiments. Components of computing device 700 shown in Fig. 7 will now be described in additional detail.

Communication interface 702 may be configured to communicate with one or more computing devices. Examples of communication interface 702 include, without limitation, a wired network interface (such as a network interface card), a wireless network interface (such as a wireless network interface card), a modem, an audio/video connection, and any other suitable interface.

Processor 704 generally represents any type or form of processing unit capable of processing data and/or interpreting, executing, and/or directing execution of one or more of the instructions, processes, and/or operations described herein. Processor 704 may perform operations by executing computer-executable instructions 712 (e.g., an application, software, code, and/or other executable data instance) stored in storage device 706.

Storage device 706 may include one or more data storage media, devices, or configurations and may employ any type, form, and combination of data storage media and/or device. For example, storage device 706 may include, but is not limited to, any combination of non-volatile media and/or volatile media. Electronic data, including data described herein, may be temporarily and/or permanently stored in storage device 706. For example, data representative of computer-executable instructions 712 configured to direct processor 704 to perform any of the operations described herein may be stored within storage device 706. In some examples, data may be arranged in one or more databases residing within storage device 706.

I/O module 708 may include one or more I/O modules configured to receive user input and provide user output. I/O module 708 may include any hardware, firmware, software, or combination thereof supportive of input and output capabilities. For example, I/O module 708 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 708 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 708 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 700.

For further explanation and as an additional example of a supporting technology for securing data lake tables using row-level security, Fig. 8 sets forth a block diagram of a cloud service provider service architecture in accordance with some embodiments. The cloud service provider 802 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 8, the cloud service provider 802 is accessed from a client device 834 via a network 832.

Fig. 8 depicts an embodiment where software 820 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 8, as examples of software 820 that can be delivered as-a-service, the illustrated embodiment includes office productivity 822 software, customer relationship management ('CRM') 824 software, and project management 826 software. The office productivity 822 software can include applications designed to facilitate common business and personal tasks, including word processing applications, applications for spreadsheet creation, presentation design applications, and many others. The CRM 824 software can include applications for managing a business organization's relationships and interactions with customers and potential customers. The project management 826 software can include applications designed to help teams plan, organize, and manage projects efficiently by facilitating collaboration and tracking the progress of projects. Readers will appreciate that in other embodiments, other types of software may be delivered using a SaaS model.

Fig. 8 depicts an embodiment where platforms 812 can be delivered as a service. Platform-as-a-service ('PaaS') is a model that provides cloud customers with platform resources that they can use to develop, run, and manage applications without the complexity of such deploying and managing such infrastructure on their own. In Fig. 8, as examples of platform 812 resources that can be delivered as-a-service, the illustrated embodiment includes database 814 services, development tools 816 services, and execution runtime 818 services. The database 814 services can be used to provide access to databases without management overhead for the user as the cloud service provider manages the provisioning, scaling, and maintenance of the databases. The development tools 816 services can provide developers with tools to design, develop, test, and deploy applications without needing to manage the underlying infrastructure. The execution runtime 818 services can provide environments where applications or other forms of computer program code can be executed, including services to scale the execution environment. Readers will appreciate that in other embodiments, other platform resources may be delivered using a PaaS model.

Fig. 8 depicts an embodiment where infrastructure 804 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 8, as examples of infrastructure 804 resources that can be delivered as-a-service, the illustrated embodiment includes compute 806 services, storage 808 services, and networking 810 services. The compute 806 services can be used to provide on-demand access to computational resources such as VMs, containers, and serverless functions, where the cloud service provider manages the provisioning, scaling, and maintenance of such resources. The storage 808 services can provide storage resources that can be used to store and access data, without the need for customers to purchase and manage on-premises physical storage resources. The networking 810 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 8 also provides management 830 resources. The management 830 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 8 also provides security 828 resources. The security 828 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Advantages and features of the present disclosure can be further described by the following statements:
1. A method of securing data lake tables using row-level security, comprising: accessing row-level security data for a table stored in a data lake of a data analytics platform, wherein the row-level security data comprises, for one or more roles, a corresponding expression applicable to the table; identifying, for each role of the one or more roles, a subset of a plurality of rows of the table accessible to a corresponding role by satisfying the corresponding expression; and storing, in the data lake, filtering data identifying, for each role of the one or more roles, the subset of the plurality of rows of the table accessible to the corresponding role.
2. The method of statement 1, further comprising: receiving, from a workload executed in the data analytics platform, a request for security data for the table; providing the filtering data to the workload in response to the request for security data; and wherein the workload is configured to execute a query targeting the table by filtering the table using at least a portion of the filtering data corresponding to another one or more roles associated with the query.
2A. The method of statement 1, further comprising: receiving, from a workload executed in the data analytics platform, a request for security data for the table; and providing the filtering data to the workload in response to the request for security data, wherein the workload is configured to execute a query targeting the table by filtering the table using at least a portion of the filtering data corresponding to one or more other roles associated with the query.
3. The method of statements 1 or 2 or 2A, further comprising: providing, in response to the request for security data, table-level security data defining access permissions for the table; and wherein the workload is configured to apply at least a portion of the table-level security data corresponding to the other one or more roles associated with the query.
3A. The method of statements 1 or 2 or 2A, further comprising: providing, in response to the request for security data, table-level security data defining access permissions for the table, wherein the workload is configured to apply at least a portion of the table-level security data corresponding to the one or more other roles associated with the query.
4. The method of any combination of one or more of statements 1-3, 2A and 3A, further comprising: providing, in response to the request for security data, column-level security data for the table; and wherein the workload is configured to execute the query targeting the table by filtering the table using at least a portion of the column-level security data corresponding to the other one or more roles associated with the query.
4A. The method of any combination of one or more of statements 1-3, 2A and 3A, further comprising: providing, in response to the request for security data, column-level security data for the table, wherein the workload is configured to execute the query targeting the table by filtering the table using at least a portion of the column-level security data corresponding to the one or more other roles associated with the query.
5. The method of any combination of one or more of statements 1-4, 2A, 3A and 4A, further comprising receiving, by the data lake, a request for the table.
6. The method of any combination of one or more of statements 1-5, 2A, 3A and 4A, further comprising providing, in response to determining that the request for the table was received from a trusted workload, the table to the trusted workload.
7. The method of any combination of one or more of statements 1-6, 2A, 3A and 4A, further comprising denying, in response to determining that the request for the table was not received from a trusted workload and that row-level security data is applied to the table, the request for the table.
8. The method of any combination of one or more of statements 1-7, 2A, 3A and 4A, wherein the expression references another table.
9. An apparatus for securing data lake tables using row-level security, comprising: a memory; and one or more processing devices, operatively coupled to the memory, the one or more processing devices configured to: access row-level security data for a table stored in a data lake of a data analytics platform, wherein the row-level security data comprises, for one or more roles, a corresponding expression applicable to the table; identify, for each role of the one or more roles, a subset of a plurality of rows of the table accessible to a corresponding role by satisfying the corresponding expression; and store, in the data lake, filtering data identifying, for each role of the one or more roles, the subset of the plurality of rows of the table accessible to the corresponding role.
10. The apparatus of statement 9, wherein the one or more processing devices are further configured to: receive, from a workload executed in the data analytics platform, a request for security data for the table; provide the filtering data to the workload in response to the request for security data; and wherein the workload is configured to execute a query targeting the table by filtering the table using at least a portion of the filtering data corresponding to another one or more roles associated with the query.
10A. The apparatus of statement 9, wherein the one or more processing devices are further configured to: receive, from a workload executed in the data analytics platform, a request for security data for the table; and provide the filtering data to the workload in response to the request for security data, wherein the workload is configured to execute a query targeting the table by filtering the table using at least a portion of the filtering data corresponding to one or more other roles associated with the query.
11. The apparatus of statements 9 or 10 or 10A, wherein the one or more processing devices are further configured to: provide, in response to the request for security data, table-level security data defining access permissions for the table; and wherein the workload is configured to apply at least a portion of the table-level security data corresponding to the other one or more roles associated with the query.
11A. The apparatus of statements 9 or 10 or 10A, wherein the one or more processing devices are further configured to: provide, in response to the request for security data, table-level security data defining access permissions for the table, wherein the workload is configured to apply at least a portion of the table-level security data corresponding to the one or more other roles associated with the query.
12. The apparatus of any combination of one or more of statements 9-11, wherein the one or more processing devices are further configured to: provide, in response to the request for security data, column-level security data for the table; and wherein the workload is configured to execute the query targeting the table by filtering the table using at least a portion of the column-level security data corresponding to the other one or more roles associated with the query.
12A. The apparatus of any combination of one or more of statements 9-11, 10A and 11A, wherein the one or more processing devices are further configured to: provide, in response to the request for security data, column-level security data for the table, wherein the workload is configured to execute the query targeting the table by filtering the table using at least a portion of the column-level security data corresponding to the one or more other roles associated with the query.
13. The apparatus of any combination of one or more of statements 9-12, 10A and 11A, wherein the one or more processing devices are further configured to receive, by the data lake, a request for the table.
14. The apparatus of any combination of one or more of statements 9-13, 10A and 11A, wherein the one or more processing devices are further configured to provide, in response to determining that the request for the table was received from a trusted workload, the table to the trusted workload.
15. The apparatus of any combination of one or more of statements 9-14, 10A and 11A, wherein the one or more processing devices are further configured to deny, in response to determining that the request for the table was not received from a trusted workload and that row-level security data is applied to the table, the request for the table.
16. The apparatus of any combination of one or more of statements 9-15, 10A and 11A, wherein the expression references another table.
17. A non-transitory computer readable storage medium storing instructions which, when executed, cause a processing device to: access row-level security data for a table stored in a data lake of a data analytics platform, wherein the row-level security data comprises, for one or more roles, a corresponding expression applicable to the table; identify, for each role of the one or more roles, a subset of a plurality of rows of the table accessible to a corresponding role by satisfying the corresponding expression; and store, in the data lake, filtering data identifying, for each role of the one or more roles, the subset of the plurality of rows of the table accessible to the corresponding role.
18. The non-transitory computer readable storage medium of statement 17, wherein the instructions, when executed, further cause the processing device to: receive, from a workload executed in the data analytics platform, a request for security data for the table; provide the filtering data to the workload in response to the request for security data; and wherein the workload is configured to execute a query targeting the table by filtering the table using at least a portion of the filtering data corresponding to another one or more roles associated with the query.
18A. The non-transitory computer readable storage medium of statement 17, wherein the instructions, when executed, further cause the processing device to: receive, from a workload executed in the data analytics platform, a request for security data for the table; and provide the filtering data to the workload in response to the request for security data, wherein the workload is configured to execute a query targeting the table by filtering the table using at least a portion of the filtering data corresponding to one or more other roles associated with the query.
19. The non-transitory computer readable storage medium of statements 17 or 18 or 18A, wherein the instructions, when executed, further cause the processing device to: provide, in response to the request for security data, table-level security data defining access permissions for the table; and wherein the workload is configured to apply at least a portion of the table-level security data corresponding to the other one or more roles associated with the query.
19A. The non-transitory computer readable storage medium of statements 17 or 18 or 18A, wherein the instructions, when executed, further cause the processing device to: provide, in response to the request for security data, table-level security data defining access permissions for the table, wherein the workload is configured to apply at least a portion of the table-level security data corresponding to the one or more other roles associated with the query.
20. The non-transitory computer readable storage medium of any combination of one or more of statements 17-19, 18A and 19A, wherein the instructions, when executed, further cause the processing device to: provide, in response to the request for security data, column-level security data for the table; and wherein the workload is configured to execute the query targeting the table by filtering the table using at least a portion of the column-level security data corresponding to the other one or more roles associated with the query.
20A. The non-transitory computer readable storage medium of any combination of one or more of statements 17-19, 18A and 19A, wherein the instructions, when executed, further cause the processing device to: provide, in response to the request for security data, column-level security data for the table, wherein the workload is configured to execute the query targeting the table by filtering the table using at least a portion of the column-level security data corresponding to the one or more other roles associated with the query.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of securing data lake tables using row-level security, comprising:
accessing (202) row-level security data (116) for a table (106) stored in a data lake (104) of a data analytics platform (102), wherein the row-level security data (116) comprises, for one or more roles, a corresponding expression applicable to the table (106);
identifying (204), for each role of the one or more roles, a subset of a plurality of rows of the table (106) accessible to a corresponding role by satisfying the corresponding expression; and
storing (206), in the data lake (104), filtering data (122) identifying, for each role of the one or more roles, the subset of the plurality of rows of the table (106) accessible to the corresponding role.

2. The method of claim 1, further comprising:
receiving (302), from a workload (108) executed in the data analytics platform (102), a request (128) for security data (120) for the table (106); and
providing (304) the filtering data (122) to the workload (108) in response to the request (128) for security data (120), wherein the workload (108) is configured to execute a query targeting the table (106) by filtering the table (106) using at least a portion of the filtering data (122) corresponding to one or more other roles associated with the query.

3. The method of claim 2, further comprising:
providing (402), in response to the request (128) for security data (120), table-level security data (126) defining access permissions for the table (106), wherein the workload (108) is configured to apply at least a portion of the table-level security data (126) corresponding to the one or more other roles associated with the query.

4. The method of claim 2 or claim 3, further comprising:
providing (502), in response to the request (128) for security data (120), column-level security data (124) for the table (106), wherein the workload (108) is configured to execute the query targeting the table (106) by filtering the table (106) using at least a portion of the column-level security data (124) corresponding to the one or more other roles associated with the query.

5. The method of any preceding claim, further comprising receiving (602), by the data lake (104), a request (128) for the table.

6. The method of claim 5, further comprising providing (604), in response to determining that the request (128) for the table (106) was received from a trusted workload (108), the table 106 to the trusted workload (108).

7. The method of claim 5 or claim 6, further comprising denying (606), in response to determining that the request (128) for the table (106) was not received from a trusted workload (108) and that row-level security data (116) is applied to the table (106), the request (128) for the table.

8. The method of any preceding claim, wherein the expression references another table.

9. An apparatus for securing data lake tables using row-level security, comprising:
a memory; and
one or more processing devices, operatively coupled to the memory, the one or more processing devices configured to:
access (202) row-level security data (116) for a table (106) stored in a data lake (104) of a data analytics platform (102), wherein the row-level security data (116) comprises, for one or more roles, a corresponding expression applicable to the table (106);
identify (204), for each role of the one or more roles, a subset of a plurality of rows of the table (106) accessible to a corresponding role by satisfying the corresponding expression; and
store (206), in the data lake (104), filtering data (122) identifying, for each role of the one or more roles, the subset of the plurality of rows of the table (106) accessible to the corresponding role.

10. The apparatus of claim 9, wherein the one or more processing devices are further configured to:
receive (302), from a workload (108) executed in the data analytics platform (102), a request (128) for security data (120) for the table (106); and
provide (304) the filtering data (122) to the workload (108) in response to the request (128) for security data (120), wherein the workload (108) is configured to execute a query targeting the table (106) by filtering the table (106) using at least a portion of the filtering data (122) corresponding to one or more other roles associated with the query.

11. The apparatus of claim 10, wherein the one or more processing devices are further configured to:
provide (402), in response to the request (128) for security data (120), table-level security data (126) defining access permissions for the table (106), wherein the workload (108) is configured to apply at least a portion of the table-level security data (126) corresponding to the one or more other roles associated with the query.

12. The apparatus of claim 10 or claim 11, wherein the one or more processing devices are further configured to:
provide (502), in response to the request (128) for security data (120), column-level security data (124) for the table (106), wherein the workload (108) is configured to execute the query targeting the table (106) by filtering the table (106) using at least a portion of the column-level security data (124) corresponding to the one or more other roles associated with the query.

13. The apparatus of any of claims 9 to 12, wherein the one or more processing devices are further configured to receive (602), by the data lake 104, a request (128) for the table.

14. The apparatus of claim 13, wherein the one or more processing devices are further configured to provide (604), in response to determining that the request (128) for the table (106) was received from a trusted workload (108), the table (106) to the trusted workload (108).

15. A non-transitory computer readable storage medium storing instructions which, when executed, cause a processing device to:
access (202) row-level security data (116) for a table (106) stored in a data lake (104) of a data analytics platform (102), wherein the row-level security data (116) comprises, for one or more roles, a corresponding expression applicable to the table (106);
identify (204), for each role of the one or more roles, a subset of a plurality of rows of the table (106) accessible to a corresponding role by satisfying the corresponding expression; and
store (206), in the data lake (104), filtering data (122) identifying, for each role of the one or more roles, the subset of the plurality of rows of the table (106) accessible to the corresponding role.
